# EUROPEAN PATENT SPECIFICATION

(11) **EP 2 721 880 B1**
(45) Date of publication and mention of the grant of the patent: **16.01.2019**
(21) Application number: 11867981.0
(22) Date of filing: 16.06.2011
(51) Int. Cl.: H04W 52/02, H04W 28/02, H04W 28/08

(54) **METHOD AND ARRANGEMENT IN A NETWORK NODE**
VERFAHREN UND ANORDNUNG BEI EINEM NETZWERKKNOTEN
PROCÉDÉ ET AGENCEMENT DANS UN N UD DE RÉSEAU

(43) Date of publication of application: 23.04.2014
(73) Proprietor: Telefonaktiebolaget LM Ericsson (publ), 164 83 Stockholm (SE)
(72) Inventor: GEIJER LUNDIN, Erik, deceased (SE); CRAIG, Stephen, S-131 49 Nacka (SE)
(74) Representative: Brann AB
(86) International application number: PCT/SE2011/050758
(87) International publication number: WO 2012/173538

(56) References cited:
- EP-A1- 2 166 777
- EP-A2- 2 079 274
- WO-A1-2005/002137
- WO-A1-2010/077191
- WO-A1-2010/110189
- WO-A1-2010/117313
- WO-A1-2010/144001
- US-B1- 6 477 388
- OLIVER BLUME ET AL.: 'Energy Savings in Mobile Networks Based on Adaptation to Traffic Statistics' BELL LABS TECHNICAL JOURNAL vol. 15, no. 2, 2010, pages 77 - 94, XP001555947
- THOMAS BITZER ET AL.: 'New Energy-Saving Multicarrier Transceivers and Their Standardization' BELL LABS TECHNICAL JOURNAL vol. 15, no. 2, 2010, pages 53 - 58, XP001555945

## Description

### TECHNICAL FIELD

It is herein disclosed a method and arrangement in a network node. In particular is herein described a mechanism for traffic based energy saving in the network node.

### BACKGROUND

User equipment (UE), also known as mobile stations, wireless terminals and/or mobile terminals are enabled to communicate wirelessly in a wireless communication system, sometimes also referred to as a cellular radio system. The communication may be made e.g. between two user equipment units, between a user equipment and a regular telephone and/or between a user equipment and a server via a Radio Access Network (RAN) and possibly one or more core networks.

The user equipment units may further be referred to as mobile telephones, cellular telephones, laptops with wireless capability. The user equipment units in the present context may be, for example, portable, pocket-storable, hand-held, computer-comprised, or vehicle-mounted mobile devices, enabled to communicate voice and/or data, via the radio access network, with another entity, such as another user equipment or a server.

The wireless communication system covers a geographical area which is divided into cell areas, with each cell area being served by a network node, or base station e.g. a Radio Base Station (RBS), which in some networks may be referred to as "eNB", "eNodeB", "NodeB" or "B node", depending on the technology and terminology used. The network nodes may be of different classes such as e.g. macro eNodeB, home eNodeB or pico base station, based on transmission power and thereby also cell size. A cell is the geographical area where radio coverage is provided by the network node/ base station at a base station site. One base station, situated on the base station site, may serve one or several cells. The network nodes communicate over the air interface operating on radio frequencies with the user equipment units within range of the respective network node.

In some radio access networks, several network nodes may be connected, e.g. by landlines or microwave, to a Radio Network Controller (RNC) e.g. in Universal Mobile Telecommunications System (UMTS). The RNC, also sometimes termed a Base Station Controller (BSC) e.g. in GSM, may supervise and coordinate various activities of the plural network nodes connected thereto. GSM is an abbreviation for Global System for Mobile Communications (originally: Groupe Spécial Mobile).

In 3rd Generation Partnership Project (3GPP) Long Term Evolution (LTE), network nodes, or base stations, which may be referred to as eNodeBs or even eNBs, may be connected to a gateway e.g. a radio access gateway. The gateway may then in turn be connected to one or more core networks,

UMTS is a third generation mobile communication system, which evolved from the GSM, and is intended to provide improved mobile communication services based on Wideband Code Division Multiple Access (WCDMA) access technology. UMTS Terrestrial Radio Access Network (UTRAN) is essentially a radio access network using wideband code division multiple access for user equipment units. The 3GPP has undertaken to evolve further the UTRAN and GSM based radio access network technologies.

The 3GPP is responsible for the standardization of GSM, UMTS and LTE. LTE is a technology for realizing high-speed packet-based communication that may reach high data rates both in the downlink and in the uplink, and may be thought of as a next generation mobile communication system relative UMTS.

In the present context, the expressions downlink, downstream link or forward link may be used for the transmission path from the network node to the user equipment. The expression uplink, upstream link or reverse link may be used for the transmission path in the opposite direction i.e. from the user equipment to the network node.

There is ongoing general work with reducing the energy consumption of our radio access networks (RAN). This work is wide in terms of radio access technologies (RAT), spreading over WCDMA, GSM as well as LTE. Also, such work comprises a plurality of fundamental approaches, covering both hardware, such as e.g. batteries, antenna feeders etc, and software such as RAN algorithms and efficient programming. Further, such energy consumption reduction efforts may comprise time scales, ranging from traffic load variations which have a time frame of several hours, to using fast scheduling information changing in matter of micro seconds.

A specific discipline within energy saving is called Traffic Based Energy Saving (TBES). The idea here is to consider the interior of RAN physical network nodes, such as RNC and RBS, in a modular fashion. A module is characterised by a set of hardware components being useful and possible to activate and deactivate together. The modules may also be looked upon as system resources that may be activated when needed and deactivated when not needed, to save power. Essentially, the idea is that the number of active modules, and thereby also the energy consumption, may vary with the traffic load.

A crucial requirement for successful operation of TBES is to maintain a margin between the number of activated modules and the amount required to support the current traffic load. This margin is necessary for preventing the number of required modules from exceeding the number of activated modules. Maintaining the margin is complicated by natural traffic variations in combination with (module individual) activation times that modules may suffer from. The choice of targeted margin size is a trade-off between amount of saved energy and risk of letting any user equipment experience a lack of active modules.

The activation times may be anything from micro seconds e.g. in cases related to LTE scheduling scheme, to some 10th of milliseconds e.g. in RBS power amplifier power change, or up to even several seconds, when activating the RBS power amplifier from complete idle in which there are no active carriers.

A straight forward solution to maintain the margin between actual and required amount of active modules is to measure it and increase/ decrease the number of activated modules based on the measurement. This approach may be combined with a policy regarding the trade-off between power saving and risk of experiencing lack of activated modules.

Document WO 2010/117313 A1 discloses a data communication scheduling allowing reduction of static power consumption by the radio base station. Only a subset of the transmitters and receivers are active in the data communication scheduling system, while remaining transmitters and receivers are at least temporarily turned off. The operation of the receiver and transmitter status controllers is preferably based at least partly on expected traffic load in the three cells. An estimation of the amount of currently buffered data to and from the user equipment in the cells provides an estimate of the traffic status in the cells.

Since the above discussed solutions simply react on the traffic load that the system already experiences, the margin needs to be rather big in order to compensate for the fluctuation of the future traffic load. Thereby, by maintaining a big margin just in case, the energy consumption remains higher than the actual energy need of the network node.

By using an assumption on statistical traffic variations, and thus rely on a margin sufficiently large to handle expected traffic variations, the risk of the network node not being able to serve a suddenly increased system load may be reduced but only at the cost of unnecessary energy consumption. The margin may thereby not be reduced, without increasing the probability of experiencing lack of active modules.

### SUMMARY

It is therefore an object to obviate at least some of the above mentioned disadvantages and to improve the performance in a wireless communication system.

According to a first aspect, the object is achieved by a method in a network node. The method aims at achieving traffic based energy saving. The network node comprises an observing part and a controlled part. The controlled part comprises modules associated with radio communication, such as transmission or reception of radio signals. The method comprises acquiring a predicted future traffic load related information from the observing part, wherein the observing part uses a time lag between a time of traffic load change and a time of propagation of the traffic load change to the controlled part to predict a future traffic load, and wherein the predicted future traffic load related information comprises at least one of an allocated bitrate to be applied on a user equipment served by the network node, and a command to modify the allocated bitrate associated with the user equipment. Further, the method comprises evaluating a required number of active modules for radio communication at the predicted traffic load. In addition, the method also comprises adjusting the number of active modules at the controlled part, according to the required number of active modules.

According to a second aspect, the object is achieved by an arrangement in a network node. The arrangement aims at achieving traffic based energy saving. The network node comprises an observing part and a controlled part, which controlled part comprises modules associated with radio communication, such as transmission or reception of radio signals. The arrangement comprises a processing circuit, configured to acquire a predicted future traffic load related information from the observing part, wherein the observing part uses a time lag between a time of traffic load change and a time of propagation of the traffic load change to the controlled part to predict a future traffic load, and wherein the predicted future traffic load related information comprises at least one of an allocated bitrate to be applied on a user equipment served by the network node, and a command to modify the allocated bitrate associated with the user equipment. The processing circuit is further configured to evaluate a required number of active modules for radio communication at the predicted traffic load. Further, the processing circuit is also configured to adjust the number of active modules at the controlled part, according to the required number of active modules.

Thanks to embodiments of the present methods and arrangements, by using not only feedback information about the current load situation in the own part of the network node, but also feedforward information on future traffic load provided by other parts of the network node, it is possible to operate with a smaller margin between activated and used modules, without increased risk of reduced service quality due to lack of active modules. The reduced margin means that fewer modules will be activated on average, which in the end leads to lower energy consumption. Thus an improved performance within the wireless communication system is achieved.

Other objects, advantages and novel features will become apparent from the following detailed description of the present method and arrangement.

### BRIEF DESCRIPTION OF THE DRAWINGS

The methods and arrangements are described in more detail with reference to attached drawings illustrating exemplary embodiments in which:
- Figure 1A: is a schematic block diagram illustrating a wireless communication system according to some embodiments,
- Figure 1B: is a schematic block diagram illustrating a wireless communication system according to some embodiments.
- Figure 2: is a combined flow chart and block diagram illustrating method actions according to some embodiments.
- Figure 3: is a schematic block diagram illustrating an embodiment of the arrangement in a network node.
- Figure 4: is a schematic block diagram illustrating some actions comprised in embodiments of the present method in a network node.
- Figure 5: is a schematic block diagram illustrating an embodiment of an arrangement in a network node.

### DETAILED DESCRIPTION

Embodiments herein are defined as a method and an arrangement in a network node, which may be put into practice in the embodiments described below. These embodiments may, however, be exemplified and realised in many different forms and are not to be considered as limited to the embodiments set forth herein; rather, these embodiments are provided so that this disclosure will be thorough and complete.

Still other objects and features may become apparent from the following detailed description considered in conjunction with the accompanying drawings. It is to be understood, however, that the drawings are designed solely for purposes of illustration and not as a definition of the limits of the herein disclosed embodiments, for which reference is to be made to the appended claims. It is further to be understood that the drawings are not necessarily drawn to scale and that, unless otherwise indicated, they are merely intended to conceptually illustrate the structures and procedures described herein.

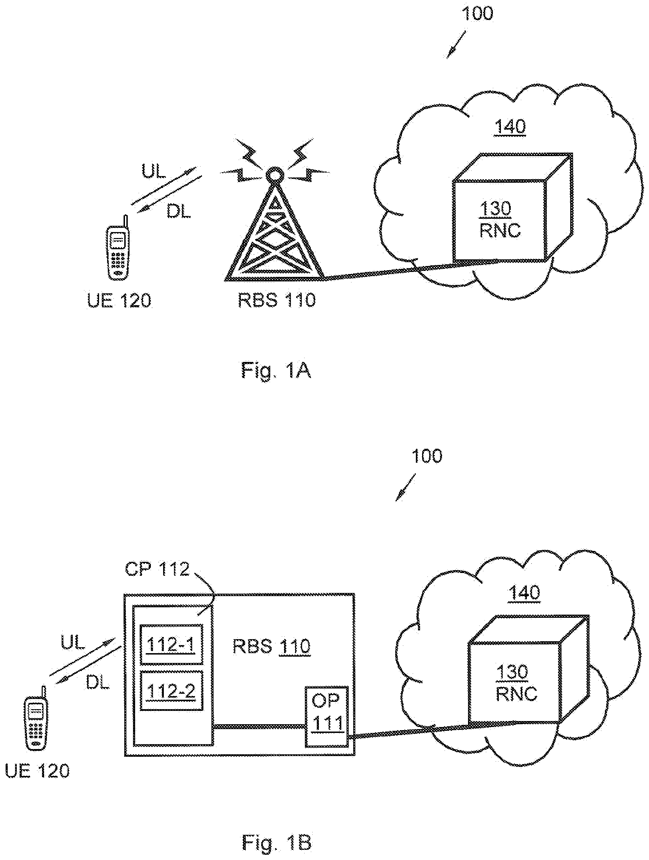

**Figure 1A** depicts a wireless communication system 100. The wireless communication system 100 may at least partly be based on radio access technologies such as e.g. 3GPP LTE, LTE-Advanced, Evolved Universal Terrestrial Radio Access Network (E-UTRAN), UMTS, GSM/ Enhanced Data rate for GSM Evolution (GSM/EDGE), Wideband Code Division Multiple Access (WCDMA), Worldwide interoperability for Microwave Access (WiMax), or Ultra Mobile Broadband (UMB), Evolved Universal Terrestrial Radio Access (E-UTRA), Universal Terrestrial Radio Access (UTRA), GSM EDGE Radio Access Network (GERAN), 3GPP2 CDMA technologies e.g. CDMA2000 1x RTT and High Rate Packet Data (HRPD), just to mention some few options.

The wireless communication system 100 may be configured to operate according to the Time Division Duplex (TDD) and/or the Frequency Division Duplex (FDD) principle, according to different embodiments.

TDD is an application of time-division multiplexing to separate uplink and downlink signals in time, possibly with a guard period situated in the time domain between the uplink and downlink signalling. FDD means that the transmitter and receiver operate at different carrier frequencies.

The purpose of the illustration in Figure 1A is to provide a simplified, general overview of the methods and arrangements herein described, and the functionalities involved. The methods and arrangements will herein, as a non-limiting example, be described mainly in a WCDMA based environment. However, the methods and arrangements described herein may, with some minor modification be applied as well in e.g. an LTE environment, according to some embodiments.

The herein disclosed methods and arrangements primarily concerns TBES algorithms in radio network nodes, such as base stations or Radio Network Controller, but the fundamentals may also be applicable to other nodes of a RAN.

The wireless communication system 100 comprises a network node 110 and a user equipment 120, configured to communicate with each other. Embodiments of the network node 110 may also be connected to a network 140, such as a core network, possibly over another node such as a Radio Network Controller 130.

The user equipment 120 is configured to transmit radio signals comprising information to be received by the network node 110. The user equipment 120 is configured to receive radio signals comprising information transmitted by the network node 110.

It is to be noted that the illustrated network setting of network nodes 110 and user equipment 120 in Figure 1A is to be regarded as a non-limiting exemplary embodiment only. The wireless communication network 100 may comprise any other number and/or combination of network nodes 110 and user equipment 120, although only one instance of a user equipment 120 and one instance of a network node 110, respectively, are illustrated in Figure 1A for clarity reasons. A plurality of network nodes 110 and/or user equipment units 120 may further be involved in embodiments of the present methods. Thus whenever "one" or "a/an" network node 110 and/or user equipment 120 is referred to in the present context, a plurality of network nodes 110 and/or user equipment units 120 may be involved, according to some embodiments.

The network node 110 may in some embodiments be referred to as e.g. base station, NodeB, evolved Node B (eNB, or eNode B), base transceiver station, Access Point Base Station, base station router, Radio Base Station (RBS), macro base station, micro base station, pico base station, femto base station, Home eNodeB, sensor, beacon device relay node and/ or a repeater or any other network node configured for communication with the user equipment 120 over a wireless interface, depending e.g. of the radio access technology and terminology used.

In the subsequent part of the disclosure, in order to not unnecessarily complicate the explanation, the methods and arrangements in the scenario depicted in Figure 1A will be described, wherein the term "network node", or "base station", will be used for the network node 110.

The user equipment 120 may be represented by e.g. a wireless communication terminal, a mobile cellular phone, a Personal Digital Assistant (PDA), a wireless platform, a mobile station, a portable communication device, a laptop, a computer, a wireless terminal acting as a relay, a relay node, a mobile relay, a Customer Premises Equipment (CPE), a Fixed Wireless Access (FWA) nodes or any other kind of device configured to communicate wirelessly with the network node 110.

The network node 110 controls the radio resource management within the cell, such as e.g. allocating radio resources to the user equipment units 120 within the cell and ensuring reliable wireless communication link between the network node 110 and the user equipment 120. The network node 110 may comprise a Node B, which may be connected to a Radio Network Controller (RNC) 130, e.g. in a WCDMA environment, according to some embodiments.

The Radio Network Controller 130 may be a governing element in a WCDMA wireless communication network 100, responsible for control of the Node B/ network node 110, which may be connected to the Radio Network Controller 130. The Radio Network Controller 130 may carry out radio resource management and some of the mobility management functions, to mention some examples.

Some embodiments of the methods and arrangement described herein may be proactive and prepare for future higher load. A reliable load prediction may be an appropriate basis for algorithms operating with lower margin without increased risk of having too few activated modules when the traffic load increases.

However, for various reasons, such as processing time, coordination between different node mechanisms and signalling delay between different nodes 110, 120, 130, a downlink traffic load change (increase or decrease) is known in the link related modules of the network node 110 before the load change has propagated to the radio related modules of the same network node 110. That is, if e.g. a change in user downlink bit rate allocation is made by the link modules it is beneficial to also inform a TBES algorithm, or TBES regulator or TBES computer program as it also may be referred to as, in control of the radio related modules that a traffic load change is to be expected. Such link related modules of the network node 110 may be connected over a wired or wireless link to e.g. an RNC, or other network node according to some embodiments. A wireless link may comprise microwave, satellite or any other appropriate wireless connection.

In this way, the TBES regulator according to some embodiments may use deterministic knowledge of the future traffic load within the system 100 to minimize energy consumption without jeopardizing service quality due to lack of activated modules. This will be further described in conjunction with presenting **Figure 1B****.**

**Figure 1B** depicts a wireless communication system 100, similar to the already presented system 100 in Figure 1A. However, it is here illustrated the previously mentioned parts and modules. The network node 110 thus may comprise an Observing Part (OP) 111 and a Controlled Part (CP) 112. The observing part 111 is the part of the network node 110 that may handle the interface towards the core network 140. Such interface may comprise a wired or wireless connection. In, for example, the case of WCDMA, the observing part 111 may comprise the part of the network node 110 that controls the user downlink bit rates over lub. However, embodiments of the observing part 111 may be configured to not only observe a change in load but to actually modify an allocated bitrate associated with the user equipment 120, served by the network node 110. Thereby, the observing part 111 may be actively allocating resources to be used by the controlled part 112 in some embodiments.

The controlled part 112 may comprise the parts of the same network node 110 handling the downlink radio transmission. The controlled part 112 may thus comprise modules 112-1, 112-2 associated with downlink radio transmission such as for example energy consuming power amplifiers. It is further to be noted that even if the illustrated example of the controlled part 112 only comprises two modules 112-1, 112-2, the controlled part 112 may comprise any number of modules 112-1, 112-2, according to different embodiments. Further, other embodiments may be predicting uplink load, correspondingly with the discussed example on the downlink,

The modules 112-1, 112-2 may in turn comprise Radio frequency power amplifiers, according to some embodiments. Radio frequency power amplifiers contribute to the power consumption in the wireless communication system 100. Such power amplifiers may comprise e.g. Class A and/or Class AB type amplifiers, Class-D amplifiers, Voltage Mode Class D amplifiers, Current Mode Class D amplifiers and/or Doherty amplifiers just to mention some options.

Thereby traffic based energy saving may be made, based on a deterministic prediction of the traffic load within the wireless system 100, by acquiring the predicted traffic load from the observing part 111, evaluating the number of active modules 112-1, 112-2, which is required in order to transmit downlink radio signals at the predicted traffic load, and adjusting, i.e. activating or deactivating the number of active modules 112-1, 112-2 at the controlled part 112, according to the required number of active modules 112-1, 112-2.

Thanks to the deterministic prediction of the traffic load within the wireless system 100, the margin may be set lower than otherwise, which leads to a lower energy consumption without risking running out of radio resources. Also, deactivating any of modules 112-1, 112-2 when they are not needed may lead to prolonged lifetime of the modules 112-1, 112-2. Further, deactivating any of the modules 112-1, 112-2 when they are not needed may lead to less heating within the network node 110 comprising the modules 112-1, 112-2.

Embodiments of the current methods and arrangements use the time lag between the moment in time when the observing part 111 knows about a downlink traffic load change, either through causing it via changed resource allocations, or by observing changed traffic load, and the moment in time when the traffic load change has propagated to the controlled part 112. If the TBES regulator in control of modules 112-1, 112-2 in the controlled part 112 has this deterministic knowledge of a future traffic load increase in the controlled part 112, the margin introduced in the previous section may be chosen smaller without compromising a low risk of not having sufficient active modules 112-1, 112-2 to cater for the traffic load.

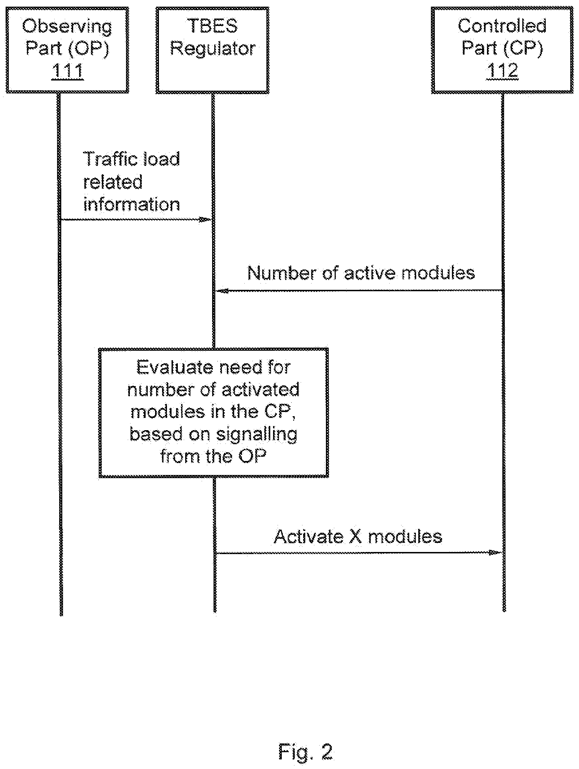

An example of a sequence of actions that may be performed in order to achieve at least some of the herein described advantages will be further discussed together with presentation of **Figure 2****.**

**Figure 2** is a combined flow chart and block diagram, illustrating a non-limiting embodiment of the present method. The TBES implementation activating/deactivating the downlink radio transmission modules in the controlled part 112 uses signalling from the observing part 111 and not just actual load measurements in the controlled part 112.

According to some embodiments, the observing part 111 of the network node 110 may provide predicted traffic load related information to be received by an operational function within the network node 110 that may be referred to as TBES regulator. Embodiments of any such TBES regulator described and related to herein may comprise a computer program.

Further, the number of active modules 112-1, 112-2 within the controlled part 112, which may be required in order to transmit downlink radio signals at the predicted traffic load may be evaluated. Thereafter, the number of activated modules 112-1, 112-2 in the controlled part 112, based on the traffic load related information acquired from the observing part 111 may be evaluated. Thus, the number of active modules 112-1, 112-2 in the controlled part 112 may be adjusted according to the required number of active modules 112-1, 112-2. A command may be transmitted to the controlled part 112 to adjust the number of active modules 112-1, 112-2 accordingly, i.e. activating, or deactivating the appropriate number of modules 112-1, 112-2.

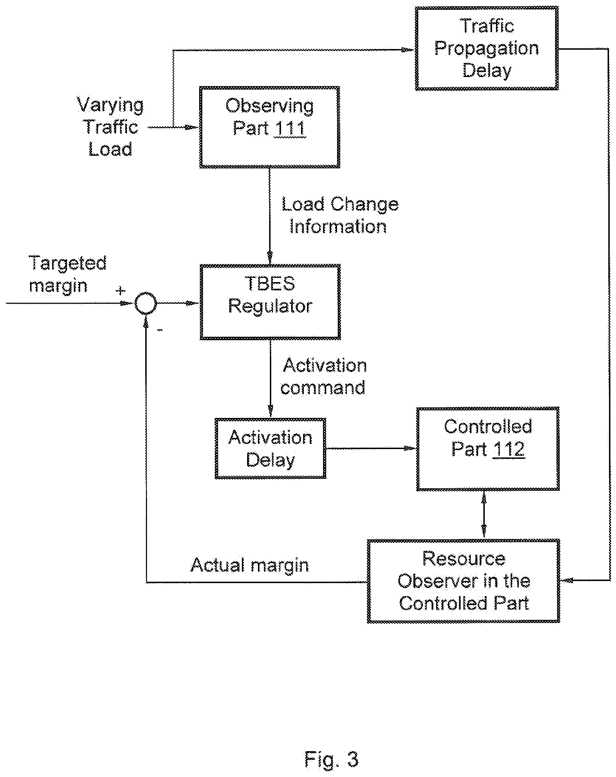

Figure 3 illustrates a state transition diagram showing how the two parts 111, 112 and the TBES regulator may interact, according to some embodiments, in order to control the margin in number of active modules 112-1, 112-2 in the controlled part 112.

The load measurements and/or resource allocation commands in the observing part 111 are used as feedforward information in the TBES regulator for the controlled part 112. This is in addition to the feedback information about the current situation in the controlled part 112 that the resource observing part 111 provides.

As shown in Figure 3, the information provided by the observing part 111 is an example of a feed forward signal used in addition to the feedback signal informing about the current situation in the controlled part 112. The feedback signal is provided by an observer connected to modules 112-1, 112-2 in the controlled part 112. In this automatic control perspective, the varying traffic load may be considered to be a time varying disturbance.

As an example of interaction between the observing part 111 and the controlled part 112, when the transport network module in the network node 110 of a WCDMA network 140 (corresponding to the observing part 111 above) sends a capacity allocation command from the network node 110 to the RNC 130 allocating more bandwidth for a user's downlink traffic over the transport network, it will also inform the TBES regulator in charge of configuring (activating) radio transmission power amplifiers 112-1, 112-2 in the controlled part 112 that it may expect more downlink traffic. The TBES regulator may then consider this information in addition to knowledge of the amount of downlink traffic that is supported by the current power amplifier configuration, i.e. information about the current state. Since it may take some time before the increased bandwidth allocation is actually utilized, the power amplifier configuration may be prepared once the traffic increase causes a need for increased transmission capabilities, even with a relatively small margin, The time between issuing a capacity allocation and the traffic actually being adjusted to the new bandwidth allocation may be e.g. at least 10 ms, but may be up to a second in the case of remote location of the network node 110. This time comprises e.g, the capacity allocation traveling to the RNC 130, processing time in the RNC 130 and the propagation time for the new bit rate to hit the network node 110. Similar times may be found in other RAN techniques.

A similar scenario may comprise when the transport network bit rate is regulated using TCP rather than using capacity allocation commands. In this case, it may be useful for the TBES regulator to know that a TCP packet has deliberately been prepared in order to reduce the transmission bit rate from the TCP server. This idea may also be applied in LTE, where a regular Active Queue Management algorithm may use TCP packet dropping to regulate the bit rate to the network node 110 (eNodeB) according to some embodiments.

The herein disclosed method aims at traffic based energy saving within the network node 110. The network node 110 comprises an observing part 111, which may have a wired, or wireless connection to a core network 140. Further, the network node 110 comprises a controlled part 112 which comprises modules 112-1, 112-2 associated with radio communication, such as transmission or reception of radio signals. The controlled part 112 may comprise more than one modules 112-1, 112-2, such as e.g. two, three, four, five etc. modules. Embodiments of the modules 112-1, 112-2 may comprise radio amplifiers.

The network node 110 may comprise a Radio Base Station in a Wideband Code Division Multiple Access, WCDMA, system 100. Also, the observing part 111 may be connected via an lub interface to a Radio Network Controller 130. The lub interface may be a wired or wireless connection to the Radio Network Controller 130, according to different embodiments.

The network node 110 may alternatively comprise an evolved node B in a Long Term Evolution, LTE, system 100. The observing part 111 may then be connected via an S2/X2 interface to the core network 140.

In yet other embodiments, the wireless communication system may be based on GSM. Thus, the network node 110 may comprise a Base Transceiver Station in a Global System for Mobile Communications, GSM. Also, the observing part 111 may be connected via an Abis interface to a Base Station Controller 130.

The network node 110 may use rate based congestion control according to a rate based transport network congestion scheme. Thereby, the network node 110 may regulate the bit rate over a connection using rate based congestion control according to some embodiments based on a rate based transport network congestion scheme.

The observing part 111 may be configured to regulate the bit rate based on errors in received data packets, delays in the reception of data packets and/or loss of data packets, independently of which congestion control scheme is used.

However, the network node 110 may use window based congestion control according to other embodiments.

Further, the network node 110 may use TCP based congestion control. Also, the observing part 111 may be configured to regulate the bit rate based on errors in received data packets, delays in the reception of data packets and/or loss of data packets.

Further, the network node 110 may be configured for wireless communication with a user equipment 120, according to some embodiments.

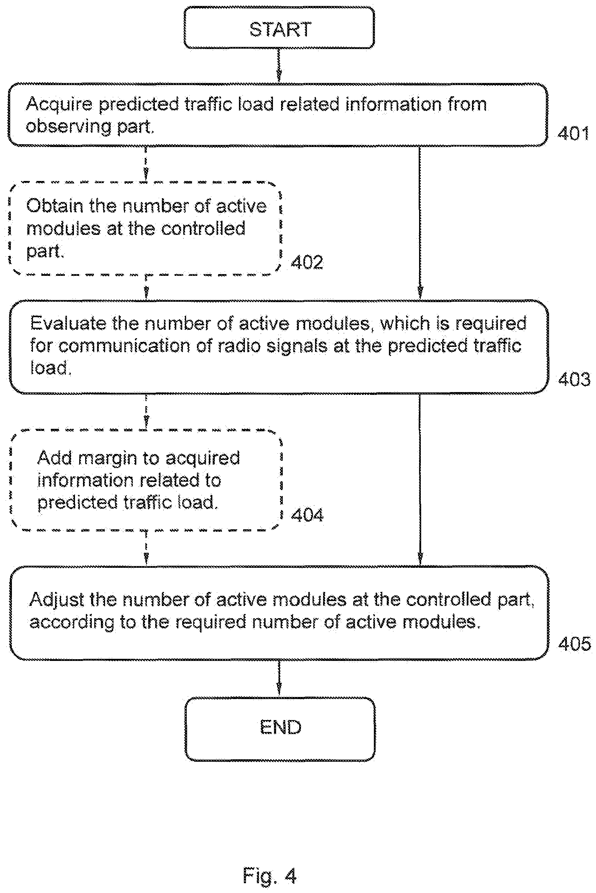

**Figure 4** is a flow chart illustrating embodiments of a method in a network node 110, To appropriately save energy in a traffic based manner within the network node 110, the method may comprise a number of actions 401-405.

It is however to be noted that some of the described actions, e.g. action 401-405 may be performed in a somewhat different chronological order than the enumeration indicates. Also, it is to be noted that some of the actions such as e.g. 402 and/ or 404 may be performed within some alternative embodiments. Further, any, some or all actions, such as e.g. 401, 403 and/ or 405 may be performed simultaneously or in a rearranged chronological order. The method may comprise the following actions:

### Action 401

A predicted traffic load related information is acquired from the observing part 111.

The information related to predicted traffic load may comprise an observation of an allocated bitrate to be applied on a user equipment 120, served by the network node 110, according to some embodiments.

However, alternatively, the information related to predicted traffic load may comprise, according to some embodiments, a command to modify the allocated bitrate, downlink or uplink, associated with a user equipment 120, served by the network node 110. The observing part 111 may achieve such information from the network 140, and/or from the RNC 130, according to different embodiments.

### Action 402

This action may be comprised within some, but not necessarily all embodiments of the method.

The number of active modules 112-1, 112-2 at the controlled part 112 may be obtained. Thus, the controlled part 112 may provide information concerning the number of active modules 112-1, 112-2, according to some embodiments.

### Action 403

The number of active modules 112-1, 112-2, which are required for radio communication at the predicted traffic load, is evaluated.

The radio communication to be made at the predicted traffic load may be in the downlink, or in the uplink according to different embodiments.

The modules 112-1, 112-2 associated with radio communication, such as transmission or reception of radio signals may comprise power amplifiers, according to some embodiments.

### Action 404

This action may be comprised within some, but not necessarily all embodiments of the method,

A margin may alternatively be added to the acquired 401 information related to predicted traffic load.

### Action 405

The number of active modules 112-1, 112-2 at the controlled part 112 is adjusted according to the required number of active modules 112-1, 112-2.

The number of active modules 112-1, 112-2 at the controlled part 112 may be adjusted, only if the obtained 402 number of active modules 112-1, 112-2 is different from the required number of active modules 112-1, 112-2, according to some embodiments.

The adjustment of the number of active modules 112-1, 112-2 may further comprise, according to some embodiments, alternating the order in which the modules 112-1, 112-2 are activated, or deactivated.

By alternating the order in which the modules 112-1, 112-2 are activated, or deactivated, the expected life time of the component may be somewhat prolonged.

Thus, thereby, if it is considered that only one module 112-1, 112-2 needs to be active for communication of radio signals at the predicted traffic load, in the downlink or uplink, acquired from the observing part 111, the other, superfluous module 112-1, 112-2 may be deactivated, according to some embodiments, which saves energy resources.

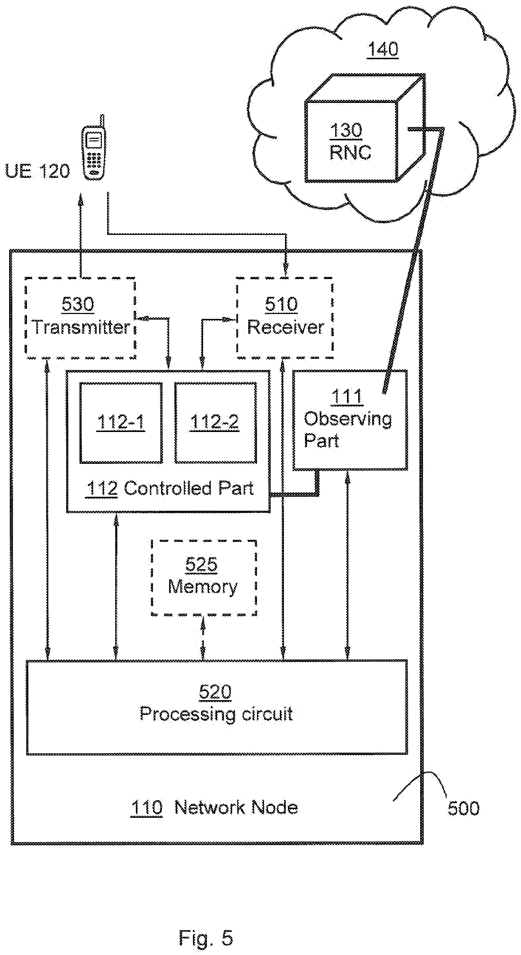

**Figure 5** is a block diagram illustrating an arrangement 500 in a network node 110. The arrangement 500 aims at traffic based energy saving within the network node 110. The network node 110 comprises an observing part 111 and a controlled part 112. The controlled part 112 may comprise modules 112-1, 112-2, associated with radio communication, such as transmission or reception of radio signals. The observing part 111 may have a wired or wireless connection to a core network 140, according to some embodiments.

The network node 110 may comprise a Radio Base Station in a Wideband Code Division Multiple Access, WCDMA, system 100, according to some embodiments, wherein the observing part 111 may be connected via an lub interface to a Radio Network Controller 130.

Also, the network node 110 may alternatively comprise an evolved node B in a Long Term Evolution, LTE, system 100. The observing part 111 may be connected via an S2/X2 interface to the core network 140.

Further, the network node 110 may comprise a Base Transceiver Station in a Global System for Mobile Communications, GSM. The observing part 111 may be connected via an Abis interface to a Base Station Controller 130.

The network node 110 may be configured to regulate the bit rate over a connection using rate based congestion control, according to some embodiments. However, alternatively, the network node 110 may be configured for window based congestion control. According to further alternative embodiments, the network node 110 may be configured for TCP based congestion control. The observing part 111 may be configured to regulate the bit rate based on errors in received data packets, delays in the reception of data packets and/or loss of data packets,

The arrangement 500 is configured to perform any, some or all of the actions 401-405 for traffic based energy saving within the network node 110.

The network node 110 may be configured for wireless communication with a user equipment 120, according to some embodiments, which user equipment 120 may be served by the network node 110.

For the sake of clarity, any internal electronics or other components of the network node 110, not completely indispensable for understanding the present method has been omitted from Figure 5.

In order to perform any, some or all the actions 401-405 correctly, the arrangement 500 comprises a processing circuit 520. The processing circuit 520 is configured to acquire a predicted traffic load related information from the observing part 111. Further, the processing circuit 520 is also configured to evaluate the number of active modules 112-1, 112-2 which is required for radio communication at the predicted traffic load. Such radio communication may comprise transmission of downlink radio signals at the predicted traffic load, according to some embodiments. In addition, the processing circuit 520 is further configured to adjust the number of active modules 112-1, 112-2 at the controlled part 112, according to the required number of active modules 112-1, 112-2.

Further, the processing circuit 520 may be configured to obtain the number of active modules 112-1, 112-2 at the controlled part 112. Also, in addition, the processing circuit 520 may be configured to adjust the number of active modules 112-1, 112-2 at the controlled part 112, only if the obtained number of active modules 112-1, 112-2 is different from the required number of active modules 112-1, 112-2. In further addition, the processing circuit 520 may also be configured for adding a margin to the acquired information related to predicted traffic load, according to some embodiments. Also, furthermore, the processing circuit 520 may alternatively be configured to adjust the number of active modules 112-1, 112-2 by activating, or deactivating the modules 112-1, 112-2.

Embodiments of the modules 112-1, 112-2 associated with communication of radio signals, such as e.g. downlink radio transmission, may comprise power amplifiers.

The observing part 111 may be configured to observe an allocated bitrate to be applied on a user equipment 120, served by the network node 110, according to some embodiments. The information related to predicted traffic load, acquired from the observing part 111 may thus comprise the allocated downlink bitrate associated with the user equipment 120, served by the network node 110. However, the information related to predicted traffic load, acquired from the observing part 111 may comprise a command to modify the allocated bitrate, downlink or uplink, associated with a user equipment 120, served by the network node 110.

The processing circuit 520 may comprise e.g. one or more instances of a Central Processing Unit (CPU), a processing unit, a processor, a microprocessor, or other processing logic that may interpret and execute instructions. The processing circuit 720 may further perform data processing functions for inputting, outputting, and processing of data comprising data buffering and device control functions, such as call processing control, user interface control, or the like.

The arrangement 500 may further comprise a receiver 510, according to some embodiments. The receiver 510 may be configured to receive wireless signals from the user equipment 120.

In addition, the arrangement 500 may comprise a transmitter 530 according to some embodiments. The transmitter 530 may be arranged to transmit wireless signals to the user equipment 120.

According to some embodiments, the arrangement 500 may comprise a memory 525 such as a non-transitory computer readable medium. The memory 525 may comprise a physical device utilized to store data or programs i.e. sequences of instructions, on a temporary or permanent basis. Further, embodiments of the memory 525 may comprise integrated circuits comprising silicon-based transistors. In addition, the memory 525 may be volatile or non-volatile. The network node 110 may further according to some embodiments comprise a volatile memory 525 and/or a non-volatile memory 525.

Further, it is to be noted that some of the described units 111-530 comprised within the arrangement 500 in the wireless communication system 100 are to be regarded as separate logical entities but not with necessity separate physical entities. To mention just one example, the receiver 510 and the transmitter 530 may be comprised or co-arranged within the same physical unit, a transceiver, which may comprise a transmitter circuit and a receiver circuit, which transmits outgoing radio frequency signals and receives incoming radio frequency signals, respectively, via an antenna. The radio frequency signals transmitted between the network node 110 and the user equipment 120 may comprise both traffic and control signals e.g. paging signals/ messages for incoming calls, which may be used to establish and maintain a voice call communication with another party or to transmit and/or receive data, such as SMS, e-mail or MMS messages, with a remote user equipment, or other node comprised in the wireless communication system 100.

The actions 401-405 to be performed in the network node 110 may be implemented through one or more processing circuits 520 in the network node 110, together with computer program code for performing any, some or all of the functions of the present actions 401-405. Thus a computer program product, comprising instructions for performing the actions 401-405 in the network node 110 may perform traffic based energy saving, when being loaded into the one or more processing circuits 520,

The computer program product mentioned above may be referred to as a TBES regulator and/or TBES algorithm. The computer program product may be provided for instance in the form of a data carrier carrying computer program code for performing at least some of the actions 401-405 according to some embodiments when being loaded into the processing circuit 520. The data carrier may comprise e.g. a hard disk, a CD ROM disc, a memory stick, an optical storage device, a magnetic storage device or any other appropriate medium such as a disk or tape that may hold machine readable data in a non-transitory manner. The computer program product may furthermore be provided as computer program code on a server and downloaded to the user equipment 120 remotely, e.g. over an Internet or an intranet connection.

When using the formulation "comprise" or "comprising" within the present context, it is to be interpreted as non- limiting, i.e. meaning "consist at least of". The present methods and arrangements are not limited to the above described preferred embodiments. Various alternatives, modifications and equivalents may be used. Therefore, the above embodiments are not to be taken as limiting the scope of claimed protection, which instead is to be defined by the appending claims.

## Claims

1. A method in a network node (110) for traffic based energy saving, wherein the network node (110) comprises an observing part (111) and a controlled part (112) which comprises modules (112-1, 112-2) associated with radio communication, such as transmission or reception of radio signals, the method **characterised by**:
acquiring (401) a predicted future traffic load related information from the observing part (111), wherein the observing part (111) uses a time lag between a time of traffic load change and a time of propagation of the traffic load change to the controlled part (112) to predict a future traffic load, and wherein the predicted future traffic load related information comprises at least one of an allocated bitrate to be applied on a user equipment (120) served by the network node (110), and a command to modify the allocated bitrate associated with the user equipment (120);
evaluating (403) a required number of active modules (112-1, 112-2), for radio communication at the predicted future traffic load; and
adjusting (405) the number of active modules (112-1, 112-2) at the controlled part (112), according to the required number of active modules (112-1, 112-2).

2. The method according to claim 1, further comprising:
obtaining (402) the number of active modules (112-1, 112-2) at the controlled part (112), wherein
adjusting (405) the number of active modules (112-1, 112-2) at the controlled part (112) is only made if the obtained (402) number of active modules (112-1, 112-2) is different from the required number of active modules (112-1, 112-2).

3. The method according to any of claim 1 or claim 2, further comprising:
adding (404) a margin to the acquired (401) information related to predicted future traffic load.

4. The method according to any of claims 1-3, wherein adjusting (405) the number of active modules (112-1, 112-2) further comprises alternating the order in which the modules (112-1, 112-2) are activated, or deactivated, in order to alternate which modules (112-1, 112-2) are activated, or deactivated.

5. The method according to any of claims 1-4, wherein
the network node (110) comprises a Radio Base Station in a Wideband Code Division Multiple Access, WCDMA, system, and wherein
the observing part (111) is connected via a lub interface to a Radio Network Controller (130).

6. The method according to any of claims 1-4, wherein
the network node (110) comprises an evolved node B in a Long Term Evolution, LTE, system, and wherein
the observing part (111) is connected via an S2/X2 interface to the core network (140).

7. The method according to any of claims 1-4, wherein
the network node (110) comprises a Base Transceiver Station in a Global System for Mobile Communications, GSM, and wherein
the observing part (111) is connected via an Abis interface to a Base Station Controller (130).

8. The method according to any of claims 1-7, wherein the network node (110) uses rate based congestion control or window based congestion control, and the observing part (111) is configured to regulate the bit rate based on errors in received data packets, delays in the reception of data packets and/or loss of data packets.

9. The method according to any of claims 1-8, wherein
the network node (110) uses TCP based congestion control, and
the observing part (111) is configured to regulate the bit rate based on errors in received data packets, delays in the reception of data packets and/or loss of data packets.

10. An arrangement (500) comprising a network node (110) for traffic based energy saving, wherein the network node (110) comprises an observing part (111) and a controlled part (112) which comprises modules (112-1, 112-2) associated with radio communication, such as transmission or reception of radio signals, the arrangement (500) **characterised by**:
a processing circuit (520) configured to acquire a predicted future traffic load related information from the observing part (111), wherein the observing part (111) uses a time lag between a time of traffic load change and a time of propagation of the traffic load change to the controlled part (112) to predict a future traffic load, and wherein the predicted future traffic load related information comprises at least one of an allocated bitrate to be applied on a user equipment (120) served by the network node (110), and a command to modify the allocated bitrate associated with the user equipment (120), wherein the processing circuit (520) is further configured to evaluate a required number of active modules (112-1, 112-2), for radio communication at the predicted future traffic load, and wherein the processing circuit (520) is further configured to adjust the number of active modules (112-1, 112-2), at the controlled part (112), according to the required number of active modules (112-1, 112-2).

11. The arrangement (500) according to claim 10, wherein:
the processing circuit (520) is further configured to:
a) add a margin to the acquired information related to predicted future traffic load; and
b) obtain the number of active modules (112-1, 112-2) at the controlled part (112), wherein the processing circuit (520) is configured to adjust the number of active modules (112-1, 112-2) at the controlled part (112) only if the obtained number of active modules (112-1, 112-2) is different from the required number of active modules (112-1, 112-2).

12. The arrangement (500) according to any of claims 10-11, wherein:
the observing part (111) is configured to observe an allocated bitrate to be applied on a user equipment (120), served by the network node (110) and further configured to modify an allocated bitrate associated with the user equipment (120), served by the network node (110).

13. The arrangement (500) according to any of claims 10-12, wherein:
the network node (110) comprises a Radio Base Station in a Wideband Code Division Multiple Access, WCDMA, system, and wherein
the observing part (111) is connected via a lub interface to a Radio Network Controller (130).

14. The arrangement (500) according to any of claims 10-12, wherein:
the network node (110) comprises an evolved node B in a Long Term Evolution, LTE, system, and wherein
the observing part (111) is connected via an S2/X2 interface to the core network (140).

15. The arrangement (500) according to any of claims 10-12, wherein:
the network node (110) comprises a Base Transceiver Station in a Global System for Mobile Communications, GSM, and wherein
the observing part (111) is connected via an Abis interface to a Base Station Controller (130).

## Patentansprüche

1. Verfahren in einem Netzwerkknoten (110) zur verkehrsbasierten Energieeinsparung, wobei der Netzwerkknoten (110) einen überwachenden Teil (111) und einen gesteuerten Teil (112) umfasst, der Module (112-1, 112-2) umfasst, die Funkkommunikation, wie etwa dem Senden oder Empfangen von Funksignalen, zugeordnet sind, wobei das Verfahren **gekennzeichnet ist durch**:
Erfassen (401) von Informationen zu vorhergesagter künftigen Verkehrslast von dem überwachenden Teil (111), wobei der überwachende Teil (111) eine Zeitverzögerung zwischen einem Zeitpunkt einer Verkehrslaständerung und einem Zeitpunkt der Verbreitung der Verkehrslaständerung an den gesteuerten Teil (112) verwendet, um eine künftige Verkehrslast vorherzusagen, und wobei die Informationen zu vorhergesagter künftiger Verkehrslast wenigstens eins von einer zugewiesenen Bitrate zur Anwendung auf ein Benutzergerät (120), das von dem Netzwerkknoten (110) bedient wird, und einem Befehl zum Modifizieren der zugewiesenen Bitrate, die dem Benutzergerät (120) zugeordnet ist, umfassen;
Beurteilen (403) einer erforderlichen Anzahl aktiver Module (112-1, 112-2) für Funkkommunikation bei der vorhergesagten künftigen Verkehrslast; und
Anpassen (405) der Anzahl aktiver Module (112-1, 112-2) am gesteuerten Teil (112) gemäß der erforderlichen Anzahl aktiver Module (112-1, 112-2).

2. Verfahren nach Anspruch 1, ferner umfassend:
Erlangen (402) der Anzahl aktiver Module (112-1, 112-2) am gesteuerten Teil (112), wobei
das Anpassen (405) der Anzahl aktiver Module (112-1, 112-2) am gesteuerten Teil (112) nur erfolgt, wenn die erlangte (402) Anzahl aktiver Module (112-1, 112-2) sich von der erforderlichen Anzahl aktiver Module (112-1, 112-2) unterscheidet.

3. Verfahren nach einem von Anspruch 1 oder Anspruch 2, ferner umfassend:
Addieren (404) einer Marge zu den erfassten (401) Informationen zur vorhergesagten künftigen Verkehrslast.

4. Verfahren nach einem der Ansprüche 1-3, wobei das Anpassen (405) der Anzahl aktiver Module (112-1, 112-2) ferner Ändern der Reihenfolge umfasst, in der die Module (112-1, 112-2) aktiviert oder deaktiviert werden, um zu wechseln, welche Module (112-1, 112-2) aktiviert oder deaktiviert sind.

5. Verfahren nach einem der Ansprüche 1-4, wobei
der Netzwerkknoten (110) eine Funkbasisstation in einem Wideband-Code-Division-Multiple-Access(WCDMA)-System umfasst, und wobei
der überwachende Teil (111) über eine lub-Schnittstelle mit einer Funknetzwerk-Steuereinrichtung (130) verbunden wird.

6. Verfahren nach einem der Ansprüche 1-4, wobei
der Netzwerkknoten (110) einen Evolved Node B in einem Long-Term-Evolution(LTE)-System umfasst, und wobei
der überwachende Teil (111) über eine S2/X2-Schnittstelle mit dem Kernnetz (140) verbunden wird.

7. Verfahren nach einem der Ansprüche 1-4, wobei
der Netzwerkknoten (110) eine Basis-Transceiver-Station in einem Global System for Mobile Communications (GSM) umfasst, und wobei
der überwachende Teil (111) über eine Abis-Schnittstelle mit einer Basisstation-Steuereinrichtung (130) verbunden wird.

8. Verfahren nach einem der Ansprüche 1-7, wobei der Netzwerkknoten (110) ratenbasierte Überlastungssteuerung oder fensterbasierte Überlastungssteuerung verwendet und der überwachende Teil (111) dazu konfiguriert ist, die Bitrate basierend auf Fehlern in empfangenen Datenpaketen, Verzögerungen beim Empfang von Datenpaketen und/oder Verlust von Datenpaketen zu regulieren.

9. Verfahren nach einem der Ansprüche 1-8, wobei
der Netzwerkknoten (110) TCP-basierte Überlastungssteuerung verwendet, und
der überwachende Teil (111) dazu konfiguriert ist, die Bitrate basierend auf Fehlern in empfangenen Datenpaketen, Verzögerungen beim Empfang von Datenpaketen und/oder Verlust von Datenpaketen zu regulieren.

10. Anordnung (500) umfassend einen Netzwerkknoten (110) zur verkehrsbasierten Energieeinsparung, wobei der Netzwerkknoten (110) einen überwachenden Teil (111) und einen gesteuerten Teil (112) umfasst, der Module (112-1, 112-2) umfasst, die Funkkommunikation, wie etwa dem Senden oder Empfangen von Funksignalen, zugeordnet sind, wobei die Anordnung (500) **gekennzeichnet ist durch**:
eine Verarbeitungsschaltung (520), die zum Erfassen von Informationen zu vorhergesagter künftiger Verkehrslast von dem überwachenden Teil (111) konfiguriert ist, wobei der überwachende Teil (111) eine Zeitverzögerung zwischen einem Zeitpunkt der Verkehrslaständerung und einem Zeitpunkt der Verbreitung der Verkehrslaständerung an den gesteuerten Teil (112) zum Vorhersagen einer künftigen Verkehrslast verwendet, und wobei die Informationen zu vorhergesagter künftiger Verkehrslast wenigstens eins von einer zugewiesenen Bitrate zur Anwendung auf ein Benutzergerät (120), das von dem Netzwerkknoten (110) bedient wird, und einem Befehl zum Modifizieren der zugewiesenen Bitrate umfassen, die dem Benutzergerät (120) zugeordnet ist, wobei die Verarbeitungsschaltung (520) ferner konfiguriert ist zum Beurteilen einer erforderlichen Anzahl aktiver Module (112-1, 112-2) für Funkkommunikation bei der vorhergesagten künftigen Verkehrslast, und wobei die Verarbeitungsschaltung (520) ferner konfiguriert ist zum Anpassen der Anzahl aktiver Module (112-1, 112-2) am gesteuerten Teil (112) gemäß der erforderlichen Anzahl aktiver Module (112-1, 112-2).

11. Anordnung (500) nach Anspruch 10, wobei: wobei die Verarbeitungsschaltung (520) ferner konfiguriert ist zum:
a) Addieren einer Marge zu den erfassten Informationen zur vorhergesagten künftigen Verkehrslast; und
b) Erlangen der Anzahl aktiver Module (112-1, 112-2) am gesteuerten Teil (112), wobei die Verarbeitungsschaltung (520) konfiguriert ist, die Anzahl aktiver Module (112-1, 112-2) am gesteuerten Teil (112) nur dann anzupassen, wenn die erlangte Anzahl aktiver Module (112-1, 112-2) sich von der erforderlichen Anzahl aktiver Module (112-1, 112-2) unterscheidet.

12. Anordnung (500) nach einem der Ansprüche 10-11, wobei:
der überwachende Teil (111) dazu konfiguriert ist, eine zugewiesenen Bitrate zur Anwendung auf ein Benutzergerät (120) zu überwachen, das von dem Netzwerkknoten (110) bedient wird, und dazu konfiguriert ist, eine zugewiesenen Bitrate zu modifizieren, die dem Benutzergerät (120) zugeordnet ist, das von dem Netzwerkknoten (110) bedient wird.

13. Anordnung (500) nach einem der Ansprüche 10-12, wobei:
der Netzwerkknoten (110) eine Funkbasisstation in einem Wideband-Code-Division-Multiple-Access(WCDMA)-System umfasst, und wobei
der überwachende Teil (111) über eine lub-Schnittstelle mit einer Funknetzwerk-Steuereinrichtung (130) verbunden ist.

14. Anordnung (500) nach einem der Ansprüche 10-12, wobei:
der Netzwerkknoten (110) einen Evolved Node B in einem Long-Term-Evolution(LTE)-System umfasst, und wobei
der überwachende Teil (111) über eine S2/X2-Schnittstelle mit dem Kernnetz (140) verbunden ist.

15. Anordnung (500) nach einem der Ansprüche 10-12, wobei:
der Netzwerkknoten (110) eine Basis-Transceiver-Station in einem Global System for Mobile Communications (GSM) umfasst, und wobei
der überwachende Teil (111) über eine Abis-Schnittstelle mit einer Basisstation-Steuereinrichtung (130) verbunden ist.

## Revendications

1. Procédé dans un noeud de réseau (110) pour une économie d'énergie basée sur le trafic, dans lequel le noeud de réseau (110) comprend une partie d'observation (111) et une partie commandée (112) qui comprend des modules (112-1, 112-2) associés à des communications radio, telles qu'une transmission ou réception de signaux radio, le procédé étant **caractérisé par** :
l'acquisition (401) d'une information relative à une charge de trafic future prédite depuis la partie d'observation (111), dans lequel la partie d'observation (111) utilise un décalage temporel entre un temps de changement de charge de trafic et un temps de propagation du changement de charge de trafic vers la partie commandée (112) pour prédire une future charge de trafic, et dans lequel l'information relative à une charge de trafic future prédite comprend au moins un parmi un débit binaire alloué à appliquer sur un équipement d'utilisateur (120) desservi par le noeud de réseau (110), et une instruction pour modifier le débit binaire alloué associé à l'équipement d'utilisateur (120) ;
l'évaluation (403) d'un nombre requis de modules actifs (112-1, 112-2), pour des communications radio à la future charge de trafic prédite ; et
l'ajustement (405) du nombre de modules actifs (112-1, 112-2) au niveau de la partie commandée (112), selon le nombre requis de modules actifs (112-1, 112-2).

2. Procédé selon la revendication 1, comprenant en outre :
l'obtention (402) du nombre de modules actifs (112-1, 112-2) au niveau de la partie commandée (112), dans lequel
l'ajustement (405) du nombre de modules actifs (112-1, 112-2) au niveau de la partie commandée (112) est fait uniquement si le nombre obtenu (402) de modules actifs (112-1, 112-2) est différent du nombre requis de modules actifs (112-1, 112-2).

3. Procédé selon l'une quelconque de la revendication 1 ou de la revendication 2, comprenant en outre :
l'ajout (404) d'une marge à l'information acquise (401) relative à la future charge de trafic prédite.

4. Procédé selon l'une quelconque des revendications 1 à 3, dans lequel l'ajustement (405) du nombre de modules actifs (112-1, 112-2) comprend en outre l'alternance de l'ordre dans lequel les modules (112-1, 112-2) sont activés, ou désactivés, afin d'alterner les modules (112-1, 112-2) qui sont activés ou désactivés.

5. Procédé selon l'une quelconque des revendications 1 à 4, dans lequel
le noeud de réseau (110) comprend une station de base radio dans un système d'accès multiple par répartition en code à large bande, WCDMA, et dans lequel
la partie d'observation (111) est connectée via une interface luB à un contrôleur de réseau radio (130).

6. Procédé selon l'une quelconque des revendications 1 à 4, dans lequel
le noeud de réseau (110) comprend un noeud B évolué dans un système d'évolution à long terme, LTE, et dans lequel la partie d'observation (111) est connectée via une interface S2/X2 au réseau d'infrastructure (140).

7. Procédé selon l'une quelconque des revendications 1 à 4, dans lequel
le noeud de réseau (110) comprend une station émettrice-réceptrice de base dans un système global de télécommunications avec les mobiles, GSM, et dans lequel la partie d'observation (111) est connectée via une interface Abis à un contrôleur de station de base (130).

8. Procédé selon l'une quelconque des revendications 1 à 7, dans lequel le noeud de réseau (110) utilise une commande d'encombrement basée sur le débit ou une commande d'encombrement basée sur une fenêtre, et la partie d'observation (111) est configurée pour réguler le débit binaire sur la base d'erreurs dans des paquets de données reçus, de retards dans la réception de paquets de données et/ou d'une perte de paquets de données.

9. Procédé selon l'une quelconque des revendications 1 à 8, dans lequel
le noeud de réseau (110) utilise une commande d'encombrement basée sur TCP, et
la partie d'observation (111) est configurée pour réguler le débit binaire sur la base d'erreurs dans des paquets de données reçus, de retards dans la réception de paquets de données et/ou d'une perte de paquets de données.

10. Agencement (500) comprenant un noeud de réseau (110) pour une économie d'énergie basée sur le trafic, dans lequel le noeud de réseau (110) comprend une partie d'observation (111) et une partie commandée (112) qui comprend des modules (112-1, 112-2) associés à une communication radio, telle qu'une transmission ou réception de signaux radio, l'agencement (500) étant **caractérisé par** :
un circuit de traitement (520) configuré pour acquérir une information relative à une charge de trafic future prédite à partir de la partie d'observation (111), dans lequel la partie d'observation (111) utilise un décalage temporel entre un temps de changement de charge de trafic et un temps de propagation du changement de charge de trafic vers la partie commandée (112) pour prédire une future charge de trafic, et dans lequel l'information relative à une charge de trafic future prédite comprend au moins un parmi un débit binaire alloué à appliquer à un équipement d'utilisateur (120) desservi par le noeud de réseau (110), et une instruction pour modifier le débit binaire alloué associé à l'équipement d'utilisateur (120), dans lequel le circuit de traitement (520) est en outre configuré pour évaluer un nombre requis de modules actifs (112-1, 112-2), pour une communication radio à la future charge de trafic prédite, et dans lequel le circuit de traitement (520) est en outre configuré pour ajuster le nombre de modules actifs (112-1, 112-2), au niveau de la partie commandée (112), selon le nombre requis de modules actifs (112-1, 112-2).

11. Agencement (500) selon la revendication 10, dans lequel :
le circuit de traitement (520) est en outre configuré pour :
a) ajouter une marge à l'information acquise relative à une future charge de trafic prédite ; et
b) obtenir le nombre de modules actifs (112-1, 112-2) au niveau de la partie commandée (112), dans lequel le circuit de traitement (520) est configuré pour ajuster le nombre de modules actifs (112-1, 112-2) au niveau de la partie commandée (112) uniquement si le nombre de modules actifs obtenus (112-1, 112-2) est différent du nombre requis de modules actifs (112-1, 112-2) .

12. Agencement (500) selon l'une quelconque des revendications 10 à 11, dans lequel :
la partie d'observation (111) est configurée pour observer un débit binaire alloué à appliquer à un équipement d'utilisateur (120), desservi par le noeud de réseau (110) et en outre configurée pour modifier un débit binaire alloué associé à l'équipement d'utilisateur (120), desservi par le noeud de réseau (110).

13. Agencement (500) selon l'une quelconque des revendications 10 à 12, dans lequel :
le noeud de réseau (110) comprend une station de base radio dans un système d'accès multiple par répartition en code à large bande, WCDMA, et dans lequel
la partie d'observation (111) est connectée via une interface luB à un contrôleur de réseau radio (130).

14. Agencement (500) selon l'une quelconque des revendications 10 à 12, dans lequel :
le noeud de réseau (110) comprend un noeud B évolué dans un système d'évolution à long terme, LTE, et dans lequel
la partie d'observation (111) est connectée via une interface S2/X2 au réseau d'infrastructure (140).

15. Agencement (500) selon l'une quelconque des revendications 10 à 12, dans lequel :
le noeud de réseau (110) comprend une station émettrice-réceptrice de base dans un système global de télécommunications avec les mobiles, GSM, et dans lequel
la partie d'observation (111) est connectée via une interface Abis à un contrôleur de station de base (130).
